# EUROPÄISCHE PATENTANMELDUNG

(11) **EP 0 864 344 A1**
(43) Veröffentlichungstag der Anmeldung: **16.09.1998**
(21) Anmeldenummer: 98102856.6
(22) Anmeldetag: 19.02.1998
(51) Int. Cl.: B01D 21/00

(54) **Zulaufverteiler und einen solchen aufweisendes Phasenseparationsbecken**

(30) Priorität: 15.03.1997 DE 19710927
(71) Anmelder: Munters Euroform GmbH, D-52072 Aachen (DE)
(72) Erfinder: Dorgeloh,Elmar Dr.-Ing., 52064 Aachen (DE); Marggraff,Martin Dipl.-Wi.-Ing., 52146 Würselen (DE); Buer,Thomas, Dipl.-Ing., 52062 Aachen (DE)
(74) Vertreter: Patentanwälte Hauck, Graalfs, Wehnert, Döring, Siemons

(57) **Zusammenfassung**

Es werden ein Zulaufverteiler und ein einen solchen enthaltendes Phasenseparationsbecken (1) einer Abwasserreinigungsanlage beschrieben. Der Zulaufverteiler besitzt mindestens zwei gegensinnig geneigte und dachförmig aneinandergesetzte Kreuzstromlamellenpakete (8), die axial durchströmt werden und seitlich neben sich Durchlässe zum Absinken der separierten Feststoffe aufweisen. Neben seiner Strömungslenkungsfunktion übernimmt der Zulaufverteiler eine Abscheidungsfunktion und ggf. eine Abdeckfunktion von im Zulaufbereich der entsprechenden Becken angeordneten Schlammtrichtern (2).

## Beschreibung

Die vorliegende Erfindung betrifft einen Zulaufverteiler für horizontal durchströmte Phasenseparationsbecken, die nach dem Sedimentationsprinzip arbeiten. Die Erfindung ist ferner auf ein einen derartigen Zulaufverteiler aufweisendes Phasenseparationsbecken gerichtet.

Zulaufverteiler finden in nach dem Sedimentationsprinzip arbeitenden Phasenseparationsbecken Verwendung, um Strömungslenkungsfunktionen zu übernehmen. Dabei sollen möglichst laminare Strömungsverhältnisse im Becken geschaffen werden und Kurzschlußströmungen oder turbulente Strömungsverhältnisse im Zulaufbereich vermieden werden.

Der Erfindung liegt die Aufgabe zugrunde, einen Zulaufverteiler der angegebenen Art zu schaffen, der neben seiner Strömungslenkungsfunktion eine Abscheidungsfunktion besitzt.

Diese Aufgabe wird erfindungsgemäß bei einem Zulaufverteiler der angegebenen Art dadurch gelöst, daß er mindestens zwei gegenseitig geneigte und dachförmig aneinandergesetzte Kreuzstromlamellenpakete aufweist, die axial durchströmt werden und seitlich neben sich Durchlässe zum Absinken der separierten Feststoffe aufweisen.

Parallelplattenabscheider oder Lamellenabscheider sind bekannt und finden in der Wasseraufbereitung und in der Industrieabwasserreinigung Verwendung. Dabei werden vor allem Flocken aus der chemischen Fällung und mineralische Bestandteile abgeschieden. In der kommunalen Abwasserreinigung sind sie weit weniger anzutreffen. Hier werden solche Abscheider eigentlich nur in den Kompaktstufen kleinerer Kläranlagen eingesetzt.

Parallelplattenabscheider gibt es in unterschiedlichen Bauformen. Grundsätzlich werden Gleichstromabscheider, Gegenstromabscheider, Diagonalstromabscheider und Kreuzstromabscheider unterschieden. Bei dem Kreuzstromprinzip ist der horizontale Durchfluß der Trägerflüssigkeit, d. h. des Flüssigkeit-Feststoff-Gemisches, senkrecht zur Gleitbewegung der abzutrennenden Stoffe gerichtet. Bei diesem System ist es besonders wichtig, eine möglichst gleichmäßige Verteilung der Suspension über die Anströmfläche zu gewährleisten. Kreuzstromabscheider können aufgrund der Entkopplung von Durchströmungs- und Absetzrichtung nur als Anordnung paralleler Platten ausgeführt werden.

Der erfindungsgemäß ausgebildete, aus Kreuzstromlamellenpaketen bestehende Zulaufverteiler ist insbesondere für den Einsatz in horizontal durchströmten Vor-, Zwischen- und Nachklärbecken kommunaler Abwasserreinigungsanlagen geeignet. Die dachförmig aneinandergesetzten Kreuzstromlamellenpakete sind im Zulaufbereich der Becken angeordnet, so daß sie dort Strömungslenkungsfunktionen übernehmen, gleichzeitig jedoch eine entsprechende Abscheidefunktion bzw. Vorabscheidefunktion durchführen. Darüber hinaus überdecken die Pakete den bzw. die im Zulaufbereich vorgesehenen Eindicktrichter. Hierdurch werden Dichteströmungen, die in Vor-, Zwischen- oder Nachklärbecken gerade im Zulaufbereich vorherrschen, unterbunden. Dies hat zur Folge, daß die Rückvermischung von eingedicktem Schlamm mit dem zuströmenden Belebtschlamm-Wasser-Gemisch deutlich reduziert wird, so daß sich ein höherer Eindickungsgrad ergibt. Eine besondere Eignung ist für Zwischen- und Nachklärbecken gegeben.

Darüber hinaus wird mit dem erfindungsgemäß vorgesehenen Zulaufverteiler im Zulaufbereich die Absetzfläche wesentlich erhöht, wodurch sich ein insgesamt verbesserter Abscheidungsgrad einstellt.

Die Kreuzstromlamellen der Kreuzstromlamellenpakete sind vorzugsweise hinsichtlich des Abstandes der Platten und des Neigungswinkels speziell an die Eigenschaften von biologischen Schlämmen angepaßt. Die Pakete werden vorzugsweise oberhalb der vorhandenen Schlammtrichter angeordnet, so daß diese zu einem überwiegenden Teil abgedeckt sind. In der Praxis werden damit die gerade im Zulaufbereich auftretenden Dichteströmungen unterbunden, die dazu führen, daß der bereits in den Einlauftrichtern befindliche Schlamm mit dem einströmenden Belebtschlamm-Wasser-Gemisch verdünnt wird. Mit dem erfindungsgemäß ausgebildeten Zulaufverteiler wird diese Kurzschlußströmung unterbunden, da das zufließende Belebtschlamm-Wasser-Gemisch zunächst über die Lamellen strömt. Dies hat zur Folge, daß sich ein großer Teil des Belebtschlammes auf den Lamellen direkt absetzt, der dann über die vorgesehenen Durchlässe in den bzw. die Schlammtrichter fällt.

Insgesamt ergeben sich durch den erfindungsgemäß ausgebildeten Zulaufverteiler folgende Vorteile für den Betrieb von Phasenseparationsbecken, insbesondere von Zwischen- und Nachklärbecken, von kommunalen Abwasserreinigungsanlagen:
1. Unterbindung von Kurzschlußströmungen zwischen Zulauf und Eindicktrichter, woduch sich ein höherer Feststoffgehalt im Rücklaufschlamm einstellt.
2. Dadurch, daß die Lamellenpakete oberhalb der Schlammtrichter angeordnet werden, sedimentiert dort ein beträchtlicher Teil des Belebtschlammes. Dies hat zur Folge, daß weniger Schlamm in das gesamte Becken eingetragen wird. Bei diskontinuierlichen Räumeinrichtungen kann zum einen der Räumzyklus verändert werden, zum anderen unterliegt der Feststoffgehalt nicht den Schwankungen, die sich aufgrund des periodischen Räumvorgangs und Beschickens der Eindicktrichter beim Becken des Standes der Technik ergeben.
3. Es wird zusätzliche Absetz- bzw. Klärfläche eingebracht, die dazu führt, daß mehr Belebtschlamm abgeschieden wird. Hieraus ergeben sich bessere Ablaufwerte, d. h. im Überlauf der Becken sind weniger Feststoffe enthalten.
4. Die Erhöhung der Feststoffkonzentration im eingedickten Belebtschlamm weist in Abhängigkeit der Betriebsweise von Zwischen- oder Nachklärbecken folgende Vorteile auf:
   1. Wird das Becken mit gleichem Rücklaufverhältnis betrieben, so gelangt durch den Rücklaufschlammvolumenstrom eine größere Feststofffracht in die vorgeschaltete biologische Stufe, wodurch diese bei höheren Trockensubstanzgehalten betrieben werden kann.
   2. Bei einer Beibehaltung der ursprünglichen Feststofffracht des Rücklaufschlammes kann der Rücklaufschlammvolumenstrom - und damit das Rücklaufverhältnis - reduziert werden, woraus eine geringere hydraulische Belastung der biologischen Stufe und der nachgeschalteten Zwischen- oder Nachklärung resultiert. Die geringere hydraulische Belastung hat zur Folge, daß bei einer Anwendung der Erfindung eine Erweiterung einer bestehenden Kläranlage vermieden wird, oder daß bei der Neuplanung kleinere Beckenvolumina gewählt werden können.

Die Kreuzstromlamellenpakete des erfindungsgemäß ausgebildeten Zulaufverteilers bestehen zweckmäßigerweise aus mehreren übereinander angeordneten Lamellen. Im einfachsten Fall sind zwei gegensinnig geneigte Kreuzstromlamellenpakete dachförmig aneinandergesetzt, so daß sich von innen nach außen abwärts geneigte Gleitflächen für die abzuscheidenden Feststoffe ergeben, die in die Durchlässe gelangen und absinken, ggf. in die darunter angeordneten Schlammtrichter. Wie erwähnt, sind der Neigungswinkel der Lamellen der Kreuzstromlamellenpakete sowie der Abstand zwischen den Lamellen an die jeweils vorherrschenden Gegebenheiten angepaßt, wobei eine Neigung der Kreuzstromlamellenpakete gegenüber der Horizontalen von 30 - 75° und ein Abstand zwischen den Lamellen in den einzelnen Paketen von 2 - 10 cm besonders bevorzugt werden.

In der Praxis weist der erfindungsgemäß ausgebildete Zulaufverteiler eine Vielzahl von Kreuzstromlamellenpaketpaaren auf, die jeweils aus zwei dachförmig aneinandergesetzten Lamellenpaketen bestehen, nebeneinander angeordnet sind und zwischen sich jeweils einen Durchlaß besitzen. Eine derartige Ausführungsform kann bei Rechteckbecken oder auch bei Rundbecken Verwendung finden. Im letztgenannten Fall besitzt der Zulaufverteiler eine Vielzahl von Kreuzstromlamellenpaketpaaren, die jeweils aus zwei dachförmig aneinandergesetzten Lamellenpakten bestehen, radial um einen zentrischen Zulauf herum angeordnet sind und zwischen sich jeweils einen Durchlaß besitzen. Bei dieser Ausführungsform erweitern sich die Durchlässe in Radialrichtung von innen nach außen, während sie bei der vorstehend beschriebenen Ausführungsform, die für Rechteckbecken geeigneten ist, gleiche Breite besitzen und zwischen den parallel zueinander angeordneten Kreuzstromlamellenpaketpaaren verlaufen. In jedem Fall ergibt sich eine Vielzahl von dachförmig ausgebildeten Kreuzstromlamellenpaketpaaren, die seitlich nach außen und unten geneigte Gleitflächen besitzen, entlang denen die abzuscheidenden Feststoffe in die Durchlässe gelangen.

Bei einer speziellen Ausführungsform der Erfindung sind die Durchlässe stirnseitig und/oder die stirnseitigen Bereiche der Kreuzstromlamellenpakete des Zulaufverteilers durch Abdeckplatten abgedeckt. Hierdurch wird verhindert, daß das zuströmende Gemisch direkt in die Durchlässe gelangt, ohne die als Abscheider wirkenden Kreuzstromlamellenpakete passiert zu haben. Die im wesentlichen vertikal angeordneten Abdeckplatten decken vorzugsweise variable Bereiche der Stirnseiten der Kreuzstromlamellenpakete und/oder Durchlässe ab. Durch Abdecken eines größeren Bereiches kann die Strömungsgeschwindigkeit erhöht und damit bei Verstopfungen ein gewisser Spüleffekt erzielt werden, so daß hierdurch selbstreinigende Eigenschaften erreicht werden können. Im Normalfall werden in der Regel nur die Durchlässe abgedeckt, um eine Kurzschlußströmung in die Durchlässe zu verhindern. Je nach Bedarf können die Stirnseiten der Kreuzstromlamellenpakete mehr oder weniger abgedeckt werden je nach den Zulaufbedingungen..

Darüber hinaus können die Abdeckplatten Halterungen für die Lamellenpakete darstellen. Hierdurch können zusätzliche Befestigungseinrichtungen für die Lamellenpakete entfallen.

Die vorliegende Erfindung betrifft ferner ein Phasenseparationsbecken einer Abwasserreinigungsanlage. Dieses Becken ist erfindungsgemäß dadurch gekennzeichnet, daß es im Zulaufbereich einen erfindungsgemäß ausgebildeten Zulaufverteiler aufweist.

Wie bereits erwähnt, ist ein derartiges Phasenseparationsbecken vorzugsweise das Vor-, Zwischen- oder Nachklärbecken einer kommunalen Abwasserreinigungsanlage. In diesem Fall erfüllt der erfindungsgemäße Zulaufverteiler neben seiner Strömungslenkungsfunktion und Abscheidungsfunktion auch die Aufgabe der Abdeckung der vorgesehenen Schlammtrichter, wie bereits vorstehend erläutert wurde. Dies schließt jedoch nicht aus, daß die Erfindung auch Phasenseparationsbecken betrifft, bei denen keine Schlammtrichter, sondern stattdessen beispielsweise Saugräumer vorhanden sind.

Vorzugsweise überdeckt die senkrecht projizierte Grundflache der Kreuzstromlamellenpakete die Fläche des bzw. der Schlammtrichter um mindestens 50 %.

In Weiterbildung der Erfindung ist jedem dachförmigen Kreuzstromlamellenpaketpaar ein Zulauf des Phasenseparationsbeckens zugeordnet. Der Zulauf erstreckt sich hierbei vorzugsweise nicht über die gesamte Breite des dachförmigen Kreuzstromlamellenpaketpaares. Auf diese Weise wird eine besonders günstige Kombination aus Strömungslenkung und Vorabscheidung erreicht.

Der erfindungsgemäß ausgebildete Zulaufverteiler erstreckt sich vorzugsweise über etwa 20 % der Gesamtfläche des Phasenseparationsbeckens, insbesondere Zwischen- oder Nachklärbeckens. Hiermit werden optimale Ergebnisse erzielt.

Das erfindungsgemäß ausgebildete Phasenseparationsbecken kann rechteckig oder rund ausgebildet sein. Bei einem runden Becken mit zentrischem Zulauf sind die einzelnen dachförmigen Kreuzstromlamellenpaketpaare in Radialrichtung vom Zulauf ausgehend angeordnet. Es versteht sich, daß sich hierbei die neben den Kreuzstromlamellenpaketpaaren angeordneten Durchlässe mit zunehmendem Abstand vom Zulauf erweitern. Bei einem rechteckigen Phasenseparationsbecken sind die Kreuzstromlamellenpaketpaare nebeneinander und parallel zueinander angeordnet.

Im eingebauten Zustand ist der erfindungsgemäß ausgebildete Zulaufverteiler vollständig in das Phasenseparationsbecken eingetaucht.

Die Erfindung wird nachfolgend anhand eines Ausführungsbeispiels in Verbindung mit der Zeichnung im einzelnen erläutert. Es zeigen:
- Figur 1: einen Querschnitt durch den Zulaufbereich eines Nachklärbeckens, das mit einem Zulaufverteiler versehen ist, wobei dieser nur in der linken Hälfte der Figur dargestellt ist;
- Figur 2: einen Langsschnitt durch den Zulaufbereich des Beckens der Figur 1 mit dargestelltem Zulaufverteiler; und
- Figur 3: eine Draufsicht auf den Zulaufbereich des Beckens der Figuren 1 und 2.

Das in den Figuren dargestellte Nachklärbecken 1 einer kommunalen Abwasserreinigungsanlage ist in der Draufsicht etwa rechteckförmig ausgebildet und besitzt im Zulaufbereich zwei im unteren Bereich des Beckens angeordnete und nebeneinanderliegende Schlammtrichter 2, deren Seitenwände sich nach unten hin verengen. Von jedem Schlammtrichter aus führt ein Schlammabsaugrohr 4 nach oben und aus dem Becken heraus, wie insbesondere in Figur 2 gezeigt ist. Das Becken besitzt fünf nebeneinander angeordnete Zuläufe 3, die in der Stirnwand des Beckens angeordnet sind, wie in Figur 2 gezeigt. Auf diese Weise wird das Becken horizontal durchströmt.

Im Zulaufbereich des Nachklärbeckens und somit über den Schlammtrichtern 2 befindet sich ein Zulaufverteiler, der mehrere nebeneinander angeordnete und dachförmig aneinandergesetzte Kreuzstromlamellenpakete 8 umfaßt. Im einzelnen ist der Zulaufverteiler wie folgt ausgebildet:

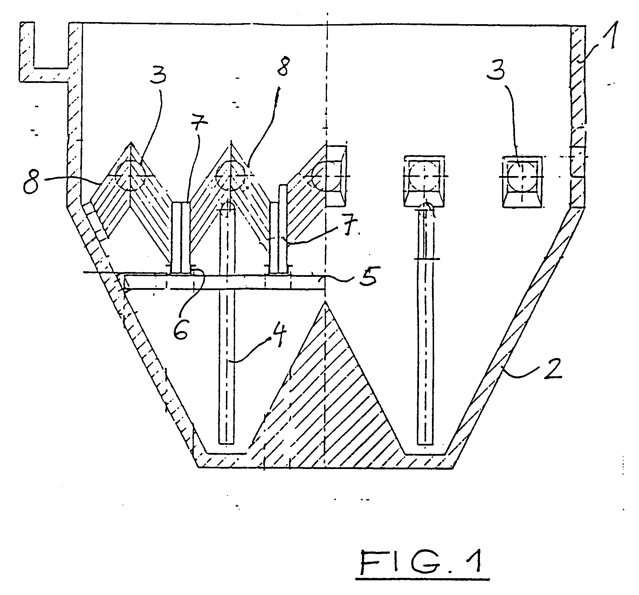

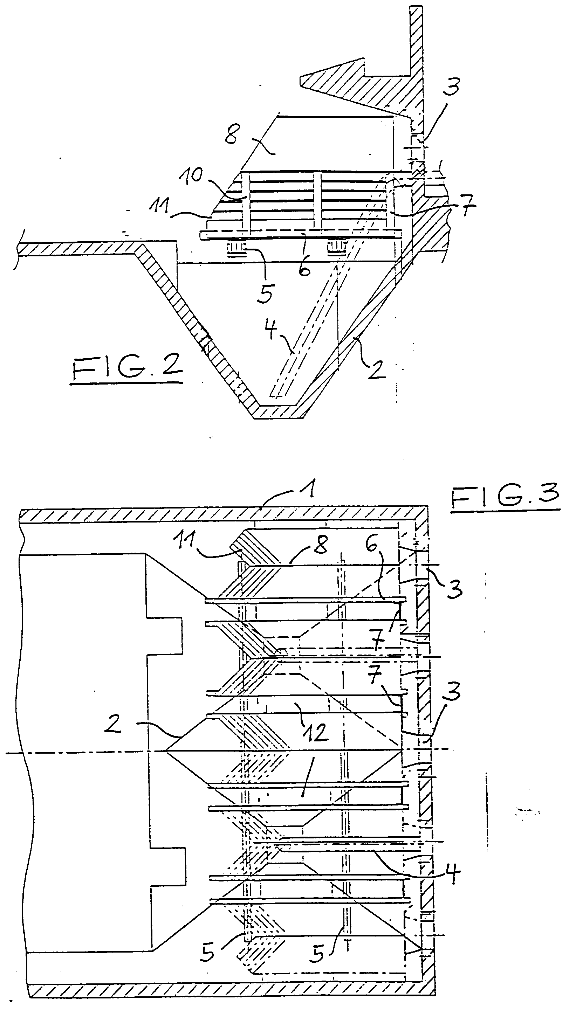

Im Zulaufbereich des Beckens erstrecken sich mehrere Querschienen 5 über die Breite des Beckens von Seitenwand zu Seitenwand, wie am besten in Figur 3 gezeigt. Auf diesen Querschienen sind im Abstand voneinander Längsschienenpaare 6 angeordnet, die sich über den Zulaufbereich des Beckens erstrecken und kurz vor dem Ende der Schlammtrichter enden. Diese Längsschienenpaare 6 fixieren jeweils zwei nebeneinander angeordnete vertikale Abdeckplatten 7, die einerseits zur Befestigung der Kreuzstromlamellenpakete 8 dienen und andererseits zwischen den Kreuzstromlamellenpaketen 8 angeordnete Durchlässe zuströmseitig abdecken, wie später beschrieben. In Figur 1 sind die vier linken Kreuzstromlamellenpakete 8 mit gleichem Neigungswinkel, jedoch gegensinnig geneigt zueinander, angeordnet, während das fünfte Kreuzstromlamellenpaket einen geringeren Neigungswinkel besitzt. Insofern ist die dieses Paket halternde Abdeckplatte 7 länger ausgebildet als die anderen Abdeckplatten.

Man erkennt, daß jedes Kreuzstromlamellenpaket aus sechs übereinander und parallel zueinander angeordneten Lamellen (Platten) besteht. Zwei benachbarte Pakete 8 sind dachförmig aneinandergesetzt. Es werden hierdurch gegensinnig geneigte Gleitflächen gebildet, auf denen die abgesetzten Feststoffe seitlich heruntergleiten und in Durchlässe 12 (in Figur 3 gezeigt) gelangen. Von dort können die Feststoffe in die Schlammtrichter 2 absinken.

Wie man Figur 1 entnehmen kann, ist jedem Beckenzulauf 3 ein Kreuzstromlamellenpaketpaar zugeordnet. Der Mittelpunkt des Zulaufes befindet sich genau auf der vertikalen Kontaktlinie zweier benachbarter Pakete, und zwar etwa auf der halben Höhe des Paketes. Die Zuströmung erfolgt somit exakt parallel zur Firstlinie des vierten Lamellenpaares von unten.

Der aus den einzelnen dachförmig angeordneten Kreuzstromlamellenpaketen bestehende Zulaufverteiler übernimmt somit Strömungslenkungsfunktionen, Abscheidefunktionen und Abdeckungsfunktionen der Schlammtrichter. Hierdurch lassen sich besonders gute Ergebnisse in bezug auf die Funktionsweise des Nachklärbeckens erzielen.

Aus Figur 2 ist zu entnehmen, daß in Längsrichtung der Kreuzstromlamellenpakete weitere Halterungen 10 zur Befestigung der Pakete angeordnet sind. Am in Figur 2 linken Ende der Pakete sind diese in der Figur nach oben rechts abgeschrägt, um Platz für einen Schlammräumer zu schaffen.

Aus Figur 3 ist zu erkennen, daß die Abdeckplatten 7 die zwischen den Kreuzstromlamellenpaketenpaaren angeordneten Durchlässe 12 zuströmseitig abdecken. Dadurch wird verhindert, daß Kurzschlußströmungen in die Durchlässe 12 entstehen. Die Abdeckplatten 7 können gemäß Figur 3 in seitlicher Richtung verlängert werden und Bereiche der Stirnseiten der Kreuzstromlamellenpaketpaare abdecken, um auf diese Weise den Zuströmbereich der Paketpaare zu verengen. Hierdurch kann durch Erhöhung der Strömungsgeschwindigkeit ein Spüleffekt erzielt werden, um die Lamellenpakete zu säubern.

Ferner kann der Zulaufverteiler oder das Phasenseparationsbecken zwischen den Zuläufen und der aufstromseitigen Stirnseite der Kreuzstromlamellenpakete angeordnete Verteilelemente (Blenden) aufweisen, um für gleichmäßige Zulaufverhältnisse zu sorgen.

## Patentansprüche

1. Zulaufverteiler für horizontal durchströmte Phasenseparationsbecken, die nach dem Sedimentationsprinzip arbeiten, dadurch gekennzeichnet, daß er mindestens zwei gegensinnig geneigte und dachförmig aneinandergesetzte Kreuzstromlamellenpakete (8) aufweist, die axial durchströmt werden und seitlich neben sich Durchlässe (12) zum Absinken der separierten Feststoffe aufweisen.

2. Zulaufverteiler nach Anspruch 1, dadurch gekennzeichnet, daß die Kreuzstromlamellenpakete (8) aus mehreren übereinander angeordneten Lamellen bestehen.

3. Zulaufverteiler nach Anspruch 1 oder 2, dadurch gekennzeichnet, daß die Durchlässe (12) stirnseitig und/oder die stirnseitigen Bereiche der Kreuzstromlamellenpakete (8) durch Abdeckplatten (7) abgedeckt sind.

4. Zulaufverteiler nach Anspruch 3, dadurch gekennzeichnet, daß die Abdeckplatten (7) Halterungen für die Lamellenpakete (8) darstellen.

5. Zulaufverteiler nach einem der Ansprüche 3 oder 4, dadurch gekennzeichnet, daß die Abdeckplatten (7) variable Bereiche der Stirnseiten der Kreuzstromlamellenpakete (8) und/oder Durchlässe (12) abdecken.

6. Zulaufverteiler nach einem der vorangehenden Ansprüche, dadurch gekennzeichnet, daß er eine Vielzahl von Kreuzstromlamellenpaketpaaren aufweist, die jeweils aus zwei dachförmig aneinandergesetzten Lamellenpaketen (8) bestehen, nebeneinander angeordnet sind und zwischen sich jeweils einen Durchlaß (12) besitzen.

7. Zulaufverteiler nach einem der Ansprüche 1 bis 5, dadurch gekennzeichnet, daß er eine Vielzahl von Kreuzstromlamellenpaketpaaren aufweist, die jeweils aus zwei dachförmig aneinandergesetzten Lamellenpaketen bestehen, radial um einen zentrischen Zulauf herum angeordnet sind und zwischen sich jeweils einen Durchlaß besitzen.

8. Zulaufverteiler nach einem der vorangehenden Ansprüche, dadurch gekennzeichnet, daß die Lamellen der Kreuzstromlamellenpakete (8) gegenüber der Horizontalen um 30 - 75° geneigt sind.

9. Zulaufverteiler nach einem der vorangehenden Ansprüche, dadurch gekennzeichnet, daß der Abstand zwischen den Lamellen in den einzelnen Paketen (8) 2 - 10 cm beträgt.

10. Phasenseparationsbecken einer Abwasserreinigungsanlage, dadurch gekennzeichnet, daß es im Zulaufbereich einen Zulaufverteiler nach einem der vorangehenden Ansprüche aufweist.

11. Phasenseparationsbecken nach Anspruch 10, dadurch gekennzeichnet, daß der Zulaufverteiler über dem Schlammtrichter (2) bzw. den Schlammtrichtern (2) des Phasenseparationsbeckens angeordnet ist.

12. Phasenseparationsbecken nach Anspruch 11, dadurch gekennzeichnet, daß die senkrecht projizierte Grundfläche der Kreuzstromlamellenpakete (8) die Fläche des Schlammtrichters (2) bzw. der Schlammtrichter (2) um mindestens 50 % überdeckt.

13. Phasenseparationsbecken nach einem der Ansprüche 10 bis 12, dadurch gekennzeichnet, daß jedem dachförmigen Kreuzstromlamellenpaketpaar ein Zulauf (3) des Phasenseparationsbeckens zugeordnet ist.

14. Phasenseparationsbecken nach einem der Ansprüche 10 bis 13, dadurch gekennzeichnet, daß es rechteckig ist.

15. Phasenseparationsbecken nach einem der Ansprüche 10 bis 13, dadurch gekennzeichnet, daß es rund ist.

16. Phasenseparationsbecken nach einem der Ansprüche 10 bis 15, dadurch gekennzeichnet, daß es das Vor-, Zwischen- oder Nachklärbecken einer kommunalen Abwasserreinigungsanlage ist.

17. Phasenseparationsbecken nach einem der Ansprüche 10 bis 16, dadurch gekennzeichnet, daß zwischen dem Beckenzulauf und der aufstromseitigen Stirnseite der mindestens zwei Kreuzstromlamellenpakete mindestens ein Strömungsverteilelement angeordnet ist.
